# DEMANDE DE BREVET EUROPEEN

(11) **EP 1 351 463 A2**
(43) Date de publication de la demande: **08.10.2003**
(21) Numéro de dépôt: 03100872.5
(22) Date de dépôt: 02.04.2003
(51) Int. Cl.: H04L 27/00, G01S 13/78

(54) **Système et procédé de démodulation de signaux IFF**

(30) Priorité: 05.04.2002 FR 0204265
(71) Demandeur: Thales, 75008 Paris (FR)
(72) Inventeur: PROVOST, Claude, 94117 CX, ARCUEIL (FR)
(74) Mandataire: Dudouit, Isabelle

(57) **Abrégé**

Procédé de décodage d'un signal dans un système de communication de type interrogation/réponse, le signal reçu étant composé d'un signal vidéo et d'un signal contenant les données. Il comporte les étapes suivantes
1. Transposer le signal de données reçu à une fréquence intermédiaire FI, S_{dh}(FI), S_{db}(FI),
2. Convertir le signal analogique à fréquence intermédiaire en un signal numérique,
3. Echantillonner le signal numérique S_{dh}(FI), S_{db}(FI) à une fréquence Fe donnée, Sₑₕ, S_{eb},
4. Transmettre le signal échantillonné Sₑₕ, S_{eb} ainsi que le signal vidéo Sᵥₕ, S_{vb} à une étape de traitement de façon à déterminer le signal initialement reçu.

Application du procédé à la démodulation de formes d'onde de type MSK, FSK, DPSK.

## Description

L'objet de la présente invention concerne un procédé et un dispositif permettant notamment de démoduler les signaux reçus dans un système de communication de type interrogateur-répondeur.

L'invention s'applique par exemple pour démoduler des signaux IFF (Identification Friend or Foe) utilisant différentes formes d'onde, telles que la modulation MSK (Minimum Shift Keying), DPSK (Differential Phase-Shift Keying), FSK (Frequency Shift Keying), etc.

Dans des systèmes de communication de type interrogation-réponse, par exemple de type IFF, les dispositifs sont généralement dédiés à une technique de codage particulier. Ceci implique de développer un dispositif avec des composants spécifiques à chaque application.

Dans le domaine IFF, par exemple, différentes formes d'onde peuvent être utilisées. Les modulations utilisées classiquement sont listées dans le tableau ci-dessous.

| Type d'interrogations/Réponses | Modulation |
|---|---|
| Interrogations/Réponses Modes 1, 2, 3/A, B, C, D, test et Mode 4 | Impulsions |
| Interrogations Mode S | Impulsions + DPSK (Differential Phase-Shift keying) |
| Réponses Mode S | Impulsions de type PPM (Pulse Position Modulation) |
| Interrogations/Réponses Mode 5 | Impulsions + MSK (Minimum Shift Keying) |

A l'heure actuelle, à chaque type de modulation est associée une technique de décodage.

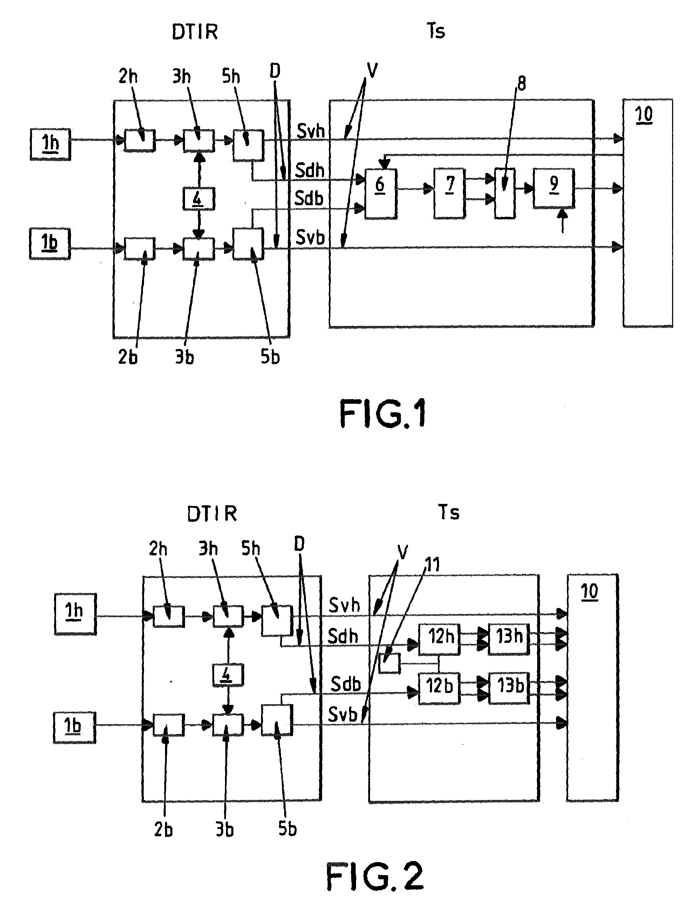

La figure 1 représente un exemple de chaîne de démodulation utilisée pour la modulation DPSK. Cette chaîne comporte par exemple deux antennes de réception, une antenne haute 1h et une antenne basse 1b, référencées en fonction de leur position dans le récepteur, un bloc 'Dual Transponder/Interrogator Receiver', DTIR et un bloc de traitement de signal Ts. Pour décoder des signaux modulés en DPSK, on utilise par exemple une ligne à retard ou une boucle de Costa dans la chaîne de réception.

Les signaux analogiques échangés dans le système de communication sont reçus sur l'antenne haute 1h et sur l'antenne basse 1b du récepteur du système de communication. Le signal Sₕ reçu par l'antenne haute et le signal S_{b} reçu par l'antenne basse sont traités de manière identique. Pour des raisons de simplification dans la description, seul l'enchaînement des étapes de traitement réalisées sur le signal Sₕ sera explicité. Il suffit de remplacer l'indice h par l'indice b correspondant à l'antenne basse pour obtenir le traitement du signal S_{b}.

Le signal analogique Sₕ est mélangé, dans un mélangeur 3h, avec une fréquence de mélange Fₘ dont la valeur est par exemple égale à 960 MHz ou à 1090 MHz. A l'issue de cette étape, est généré un signal Sₕ(FI) à une fréquence intermédiaire FI de l'ordre de 60 ou 70 MHz. La valeur de fréquence de mélange Fₘ générée par l'oscillateur local 4, correspond par exemple sensiblement à la valeur de la fréquence de réponse du système. Le signal Sₕ(FI) ainsi obtenu est ensuite transmis à un dispositif 5h ayant notamment pour fonction de séparer le signal en un signal vidéo Sᵥₕ et un signal S_{dh} à fréquence intermédiaire limitée contenant les données. Ce signal S_{dh} est indépendant de la puissance reçue au niveau de l'antenne. Le signal vidéo Sᵥₕ est transmis directement à une carte de traitement 10, voie V sur la figure. Un switch 6 permet de sélectionner le signal à traiter. Il est commandé par exemple par le signal vidéo Sᵥₕ ou S_{vb}. Le signal de données S_{dh}(FI) est envoyé vers le switch 6, puis vers une ligne de retard 7 adaptée à produire deux signaux décalés l'un de l'autre dans le temps, respectivement S_{dh}(t), S_{dh}(t+τ). Ces deux signaux ont un écart de phase Δϕ. Ils sont envoyés dans un mélangeur 8 qui détermine la valeur de l'écart de phase Δϕ. Cet écart de phase est ensuite transmis à un comparateur 9 réglé sur un seuil de décision D, qui génère ainsi un signal binaire composé de 0 et de 1. Ce signal binaire S_{bh} est transmis à la carte de traitement 10 qui reçoit aussi le signal vidéo Sᵥₕ et qui combine ces deux signaux pour déterminer le signal Sₕ reçu par l'antenne haute 1h.

Ces étapes de traitement s'appliquent aussi à la démodulation du signal S_{b} reçu sur l'antenne basse.

La figure 2 représente un exemple de chaîne de réception selon l'art antérieur pour le mode MSK, Mode 5.

La première partie Dual Transponder/lnterrogator Receiver, DTIR, est identique à celle de la figure 1 et ne sera donc pas décrite pour la figure 2.

En sortie du dispositif Dual Transponder/Interrogator Receiver, DTIR, les signaux à fréquence intermédiaire S_{dh}(FI) et S_{db}(FI) et les signaux vidéo correspondants Sᵥₕ, S_{vb} sont traités de la manière suivante :
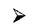 Le signal vidéo Sᵥₕ, S_{vb} est transmis directement à la carte de traitement 10, voie V,
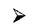 Le signal à fréquence intermédiaire S_{dh}(FI) et S_{db}(FI) est transmis à un démodulateur de type I, Q, référencé 12h, 12b, qui travaille à une fréquence délivrée par un oscillateur local 11. II peut aussi avoir sa propre horloge intégrée. En sortie du démodulateur, le signal est filtré et amplifié par un dispositif approprié 13h, 13b. Les signaux I et Q ainsi obtenus sont transmis à la carte de traitement 10, qui reçoit aussi le signal vidéo Sᵥₕ, S_{vb} et qui combine ces deux signaux pour obtenir les informations correspondantes au signal décodé.

L'objet de l'invention concerne notamment un système et un procédé qui permettent d'obtenir les données correspondantes au signal décodé par le système IFF quelque soit le type de modulation employée pour la communication.

L'invention concerne un procédé de décodage d'un signal dans un système de communication de type interrogation/réponse, le signal reçu étant composé d'un signal vidéo et d'un signal contenant les données. Il est caractérisé en ce qu'il comporte au moins les étapes suivantes :
1. Transposer le signal de données reçu à une fréquence intermédiaire FI, S_{dh}(FI), S_{db}(FI),
2. Convertir le signal analogique à fréquence intermédiaire en un signal numérique,
3. Echantillonner le signal numérique S_{dh}(FI), S_{db}(FI) à une fréquence Fe donnée, Sₑₕ, S_{eb},
4. Transmettre le signal échantillonné Sₑₕ, S_{eb} ainsi que le signal vidéo Sᵥₕ, S_{vb} à une étape de traitement de façon à déterminer le signal initialement reçu.

La valeur de la fréquence d'échantillonnage Fe est par exemple telle que pour chaque échantillon de signal l'état de phase est différent pendant une période binaire.

L'étape 2) est exécutée soit en utilisant un comparateur ayant une valeur de seuil fixé produisant un signal binaire, soit au moyen d'un CAN fournissant un signal numérique, le signal vidéo étant alors échantillonné au moyen d'un CAN.

Le procédé utilise au moins une des formes d'onde suivantes : de type MSK, DPSK, ou FSK.

L'invention concerne aussi un système de décodage d'un signal dans un système de communication de type interrogation/réponse comportant un récepteur adapté à transformer le signal reçu en un signal vidéo et un signal à fréquence intermédiaire. Il est caractérisé en ce qu'il comporte au moins les éléments suivants :
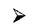 Un dispositif adapté à transformer le signal analogique à fréquence intermédiaire en un signal numérique,
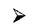 Un dispositif permettant d'échantillonner à une fréquence Fe le signal numérique
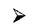 Un dispositif de traitement du signal FI échantillonné et du signal vidéo pour déterminer les signaux reçus initialement.

L'objet de l'invention présente notamment les avantages suivants :
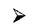 Le système ainsi obtenu s'adapte facilement à la forme d'onde ou à la modulation utilisée,
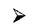 Les composants qui sont utilisés dans les chaînes de décodage sont modifiés facilement. L'adaptation aux changements de forme d'onde s'effectue, par exemple, par une modification de l'algorithme de traitement du signal.

D'autres caractéristiques et avantages apparaîtront mieux à la lecture de la description d'un exemple de réalisation donné à titre illustratif et nullement limitatif annexée des figures qui représentent :
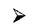 La figure 1 un exemple de chaîne de réception selon l'art antérieur pour la modulation DPSK,
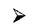 La figure 2 un exemple de chaîne de réception selon l'art antérieur pour la modulation MSK,
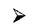 La figure 3 un synoptique d'une chaîne de réception selon l'invention,
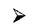 La figure 4 une variante de réalisation de la figure 3.

Afin de mieux faire comprendre l'objet de l'invention, la description qui suit est donnée dans le cadre d'une démodulation d'un signal analogique modulé en DPSK ou MSK dans un système interrogation/réponse de type IFF.

Dans la plupart des récepteurs IFF actuels, le signal à fréquence intermédiaire FI est à 60 MHz. Cette fréquence correspond à l'écart entre la fréquence d'interrogation (1030 MHz) et la fréquence de réponse (1090 MHz). L'exemple donné à titre illustratif et nullement limitatif concerne une chaîne de réception où la valeur de la fréquence intermédiaire FI est de l'ordre de 70 MHz. Les traitements numériques pour ces deux fréquences sont sensiblement identiques, ils diffèrent notamment par la valeur de la fréquence d'échantillonnage et les coefficients des filtres utilisés, un tel changement étant à la portée de l'Homme du métier.

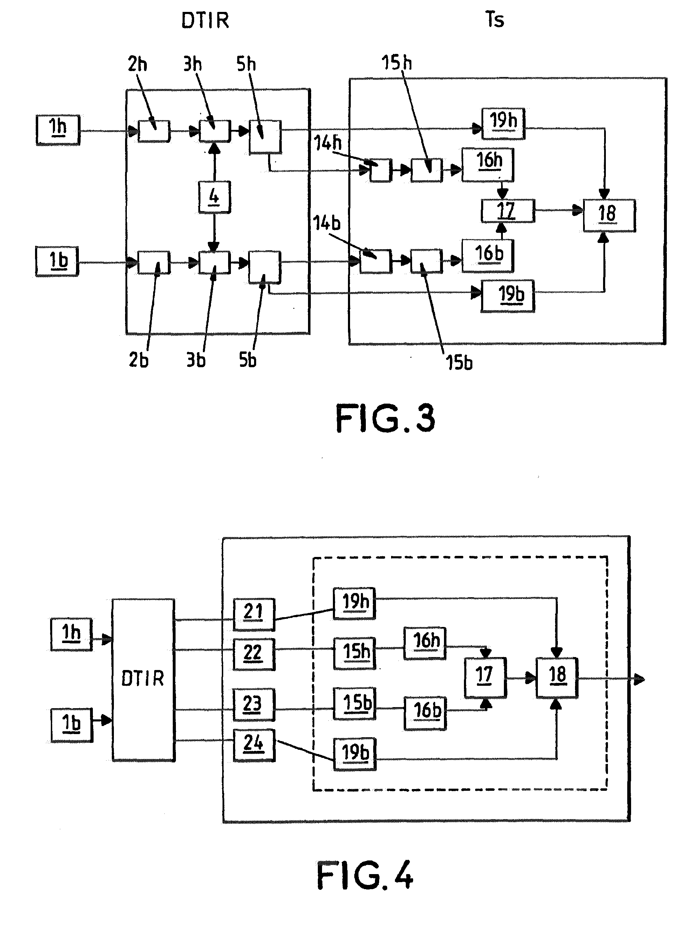

La figure 3 schématise un exemple de synoptique d'une chaîne de réception selon l'invention.

En sortie du bloc DTIR, le procédé dispose de deux signaux vidéo Sᵥₕ, S_{vb} et de deux signaux à fréquence intermédiaire, FI, contenant les informations utiles S_{dh}, S_{db}. Ces signaux correspondent respectivement aux signaux reçus sur l'antenne haute 1h et sur l'antenne basse 1b du récepteur du système IFF. Les composants identiques aux éléments décrits aux figures 1 et 2 portent les mêmes références.

Dans le but de simplifier la description, seules les étapes de traitement du signal analogique Sₕ reçu sur l'antenne haute 1h sont explicitées. Pour le signal S_{b} reçu par l'antenne basse 1b il suffit de remplacer l'indice h par l'indice b.

Comme il a été détaillé précédemment, le signal analogique reçu par les antennes 1h et 1b est traité dans le bloc DTIR, à l'issu duquel on dispose d'un signal analogique à fréquence intermédiaire S_{dh}(FI) et d'un signal vidéo Sᵥₕ.

Le signal S_{dh}(FI) correspondant aux informations utiles pour le système IFF, par exemple les données, les indications sur l'identification des objets répondants, etc., est transmis à un dispositif 14h adapté à transformer ce signal analogique en un signal binaire. Ce dispositif est, par exemple, un comparateur 14h ayant un seuil D fixé par exemple en fonction des caractéristiques du signal S_{dh}(FI). Le signal numérique est ensuite envoyé dans un démodulateur de type I, Q, référencé 15h, où il est échantillonné à une fréquence Fe, puis à un filtre 16h adapté à recaler la fréquence du signal échantillonné Sₑₕ vers une fréquence comprise dans la bande de fréquence du signal initial S. Le signal recalé Sᵣₕ est transmis à un démodulateur 17 (par exemple de type corrélation connu de l'Homme du métier), en sortie duquel est produit le train d'origine binaire du signal, S_{bh}. La démodulation de ce train binaire S_{bh} peut être réalisée par exemple selon la méthode décrite dans le brevet EP 0 661 555 B1 du demandeur par le décodeur de données 18.

Le signal vidéo Sᵥₕ est transmis à un détecteur d'impulsions 19h et au décodeur de données 18. Le signal vidéo est utilisé par exemple comme un signal de validation et de synchronisation. Ce signal de validation est utilisé, par exemple, pour inhiber le traitement dans le cas où aucun signal n'est reçu ou lorsque le signal reçu est incohérent avec un signal connu. Cela permet de s'affranchir des brouilleurs et de limiter le taux de fausses alarmes. Le signal vidéo est utilisé notamment pour connaître la forme ou l'enveloppe du signal.

Le décodeur de données 18 détermine le signal d'origine Sₕ reçu par l'antenne haute à partir du signal vidéo Sᵥₕ et du signal binaire S_{bh}. Il est capable, par exemple, de déterminer les données contenues dans le message échangé lors de l'interrogation-réponse, l'identificateur de l'objet répondeur, etc.

La fréquence d'échantillonnage Fe (au niveau du comparateur) est choisie par exemple en fonction de la fréquence intermédiaire FI utilisée dans le système IFF. Les coefficients des filtres utilisés peuvent être choisis par rapport à la valeur de la fréquence intermédiaire.

La fréquence d'échantillonnage Fe peut être choisie pour avoir, pour chaque échantillon, un état de phase différent pendant une période binaire.

La figure 4 représente une variante de la figure 3 où le comparateur (14h, 14b) est remplacé par un CAN (convertisseur analogique numérique) qui fonctionne avec sa propre horloge d'échantillonnage déterminée de la même manière que celle exposée ci-dessus.

Chacun des signaux analogiques Sᵥₕ, S_{dh}, S_{vb}, S_{db} reçus par les antennes haute et basse, est transmis à un CAN 21, 22, 23, 24 adapté à le convertir en un signal numérique. Ce signal numérique est ensuite traité de manière identique à celle décrite dans le cas où l'on utilise un comparateur.

En résumé, les deux signaux vidéo Sᵥₕ et S_{vb} sont échantillonnés au moyen des deux CAN 21, 24 avant d'être transmis au décodeur de données 18.

Les signaux contenant les informations utiles S_{dh} et S_{db} sont convertis en signaux numériques par les CAN 22, 23, à une fréquence d'échantillonnage Fe, puis transmis à un démodulateur de type I, Q, référencés respectivement 15h, 15b, échantillonnés à une fréquence Fe, avant d'être filtrés dans des dispositifs appropriés 16h, 16b puis transmis à un démodulateur 17 de type MSK/DPSK.

Les signaux vidéo et de données sont ensuite transmis au décodeur de données 18 qui fournit les signaux initiaux reçus par les antennes.

Dans les différentes variantes de réalisation, la carte de traitement peut être réalisée au moyen d'un FPGA (Field-programmable Gate Array) ou d'un ASIC (Application Specific Integrated Circuit).

## Revendications

1. Procédé de décodage d'un signal dans un système de communication de type interrogation/réponse, le signal reçu étant composé d'un signal vidéo et d'un signal contenant les données **caractérisé en ce qu'**il comporte au moins les étapes suivantes :
1. Transposer le signal de données reçu à une fréquence intermédiaire FI, S_{dh}(FI), S_{db}(FI),
2. Convertir le signal analogique à fréquence intermédiaire en un signal numérique, en utilisant un comparateur ayant une valeur de seuil fixé.
3. Echantillonner le signal numérique S_{dh}(FI), S_{db}(FI) à une fréquence Fe donnée, Sₑₕ, Se_{b},
4. Transmettre le signal échantillonné Sₑₕ, S_{eb} ainsi que le signal vidéo Sᵥₕ, S_{vb} à une étape de traitement de façon à déterminer le signal initialement reçu.

2. Procédé selon la revendication 1 **caractérisé en ce que** la valeur de la fréquence d'échantillonnage Fe est telle que pour chaque échantillon de signal l'état de phase est différent pendant une période binaire.

3. Procédé selon l'une des revendications 1 à 2 **caractérisé en ce que** l'on utilise une forme d'onde de type MSK, ou de type FSK ou encore de type DPSK.

4. Système de décodage d'un signal dans un système de communication de type interrogation/réponse comportant un récepteur adapté à transformer le signal reçu en un signal vidéo et un signal à fréquence intermédiaire **caractérisé en ce qu'**il comporte au moins les éléments suivants :
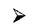 Un comparateur (14h, 14b) adapté à transformer le signal analogique à fréquence intermédiaire en un signal numérique,
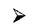 Un dispositif (15h, 15b) permettant d'échantillonner à une fréquence Fe le signal numérique,
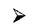 Un dispositif (18) de traitement du signal FI échantillonné et du signal vidéo pour déterminer les signaux reçus initialement.

5. Système selon la revendication 4 **caractérisé en ce que** le dispositif d'échantillonnage (15h, 15b) est un démodulateur I, Q.

6. Utilisation du procédé selon l'une des revendications 1 à 3 et du dispositif selon l'une des revendications 4 et 5 à la démodulation de signaux DPSK ou de signaux MSK ou encore de signaux FSK.
